# DEMANDE DE BREVET EUROPEEN

(11) **EP 0 687 934 A1**
(43) Date de publication de la demande: **20.12.1995**
(21) Numéro de dépôt: 95401402.3
(22) Date de dépôt: 15.06.1995
(51) Int. Cl.: G02F 1/1335

(54) **Ecran d'affichage à cristaux liquides à grille diffusante**

(30) Priorité: 17.06.1994 FR 9407450
(71) Demandeur: FRANCE TELECOM, F-75015 Paris (FR)
(72) Inventeur: Vinouze, Bruno, F-22710 Penvenan (FR); Guilbert, Martine, F-22560 Trebeurden (FR); Bosc, Dominique, F-22300 Lannion (FR)
(74) Mandataire: Dubois-Chabert, Guy

(57) **Abrégé**

L'écran comprend une couche diffusante (40) ajourée par des ouvertures (42) correspondant aux électrodes. La brillance de l'écran s'en trouve renforcée, ainsi que le contraste de l'affichage.

Application aux terminaux, ordinateurs, calculettes, etc...

## Description

### Domaine technique

La présente invention a pour objet un écran d'affichage à cristaux liquides à grille diffusante. L'écran de l'invention peut être utilisé pour les terminaux, les ordinateurs, les calculettes, etc...

### Etat de la technique antérieure

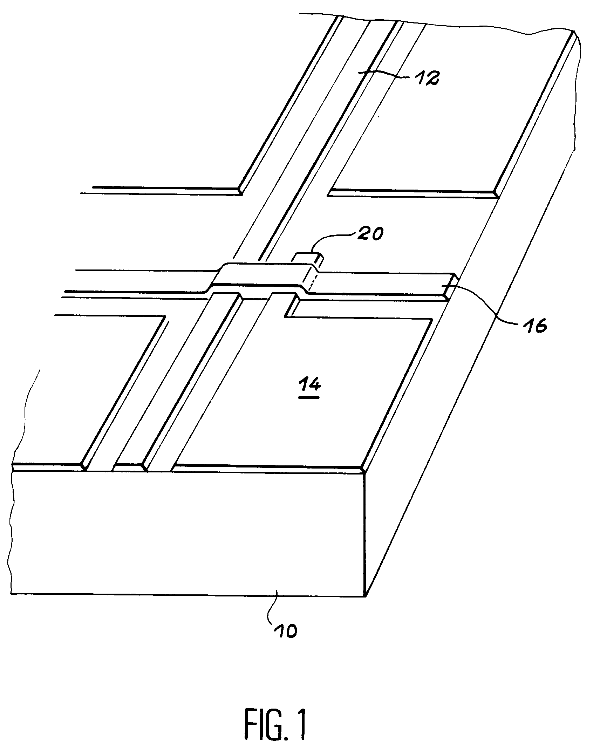

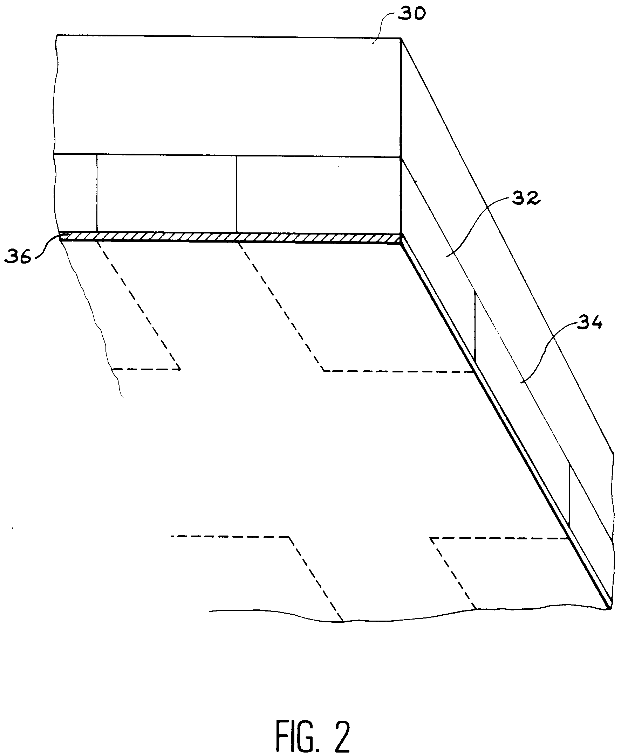

Un écran d'affichage comprend essentiellement deux plaques transparentes retenant entre elles un matériau électrooptique, par exemple un film de cristaux liquides. Les figures 1 et 2 annexées montrent un exemple de réalisation de telles plaques.

Sur la figure 1, tout d'abord, on voit un substrat transparent 10, par exemple en verre, recouvert :
- d'une première famille de bandes conductrices d'adressage 12 disposées en colonnes, par exemple en oxyde d'étain et d'indium (ITO),
- d'une matrice d'électrodes 14 constituant chacune un point d'affichage ou pixel,
- et d'une seconde famille de bandes d'adressage 16 disposées en lignes et constituées généralement par un empilement de couches, à savoir une couche semiconductrice (par exemple en aSi:H), une couche isolante (par exemple en SiN) et une couche conductrice (par exemple en aluminium).

Les électrodes 14 se prolongent par un doigt 20, de telle sorte que ce doigt et la colonne forment la source et le drain d'un transistor à couches minces (TFT pour "Thin Film Transistor" en terminologie anglo-saxonne), la grille étant constituée par la couche métallique de la ligne d'adressage.

Sur la figure 2, on voit une seconde plaque avec un second substrat transparent 30 (par exemple en verre), des pavés 32 de filtres colorés (rouge, vert, bleu), une grille noire (ou "Black Matrix") 34 et une contre-électrode 36 conductrice et transparente. Les filtres colorés 32 et la grille 34 ne sont pas essentiels dans l'invention qui va être décrite.

Un tel écran, ou tout au moins la première plaque illustrée sur la figure 1, peut être réalisé par un procédé ne nécessitant que deux niveaux de photolithogravure, comme décrit dans le document FR-A-2 533 072.

Par ailleurs, parmi les écrans d'affichage connus à cristaux liquides, (qu'ils soient ou non du type précédent), certains travaillent en mode réflectif. Cela signifie que les cristaux liquides rétrodiffusent la lumière ambiante en l'absence d'excitation électrique mais qu'ils deviennent transparents sous excitation, laissant apparaître un caractère noir.

Ce mode de fonctionnement conduit à un affichage en noir sur fond blanc. Il est avantageux car il supprime l'éclairage arrière de l'écran ce qui diminue d'autant la consommation électrique de l'écran.

L'effet optique couramment utilisé pour obtenir la réflexion de la lumière ambiante est lié aux propriétés de certains cristaux liquides du type nématique en hélice ("twisted nematic" en terminologie anglo-saxonne) utilisés avec un réflecteur arrière. Mais les cristaux liquides dispersés dans un polymère ("Polymer Dispersed Liquid Crystal", en abrégé PDLC) sont généralement utilisés pour diffuser la lumière ambiante.

L'utilisation de nématiques en hélice nécessite l'emploi de deux polariseurs. Ceux-ci absorbent plus de 50% de la lumière incidente. La brillance, (que l'on définira comme le rapport de l'intensité rétrodiffusée à l'intensité incidente) est donc faible. Des brillances de l'ordre de 5% sont habituellement obtenues, ce qui est beaucoup trop faible pour des afficheurs de haute définition visant des applications vidéo. De plus, le contraste est faible.

Avec les cristaux liquides dispersés dans un polymère (PDLC), la diffusion est influencée essentiellement par l'anisotropie optique du cristal liquide, l'indice du polymère, le diamètre des gouttelettes de cristal liquide et l'épaisseur de la cellule. La rétrodiffusion d'une cellule à cristaux liquides dispersés dans un polymère augmente quand l'anisotropie optique des cristaux liquides augmente, est d'autant plus grande que l'indice du polymère est proche de l'indice ordinaire du cristal liquide, croît lorsque le diamètre des gouttes diminue et quand l'épaisseur de la cellule augmente.

Pour un matériau donné, par exemple, le couple TL205 et PN393 fabriqué par la Société MERCK, les indices du cristal liquide TL205 et du monomère PN393 sont donnés une fois pour toutes. Par ailleurs, le diamètre des gouttelettes obtenues après insolation est également fixé à une valeur se situant entre 0,5 µm et 1 µm. Il ne reste donc plus que l'épaisseur de la cellule pour jouer sur la diffusion du film de cristaux liquides.

Avec une épaisseur de 8 µm, la brillance est de 12% alors qu'à 14 µm elle devient égale à 17%. Mais ceci est obtenu au détriment de la tension de commande. A 8 µm, la tension de commande est de 10 Volts et elle monte à près de 20 Volts pour une cellule de 14 µm. Or, la tension maximum disponible aux bornes d'un circuit d'adressage d'écran est de l'ordre de 12 Volts. Il n'est donc pas possible d'augmenter l'épaisseur de la cellule pour augmenter la brillance de l'écran, car on se retrouverait au-delà des tensions disponibles.

La présente invention a justement pour but de remédier à cet inconvénient.

### Exposé de l'invention

La présente invention tire parti du fait que, dans un écran d'affichage à matrice active (conforme par exemple aux figures 1 et 2 déjà décrites), la surface active, c'est-à-dire la surface des électrodes, ne représente que 40 à 60% de la surface totale de l'écran. Pour améliorer la brillance de l'écran, on propose alors, selon l'invention, de recouvrir la surface non active de l'écran d'une couche dont la brillance est supérieure à la brillance des seuls cristaux liquides. La surface non-active, à forte brillance, vient alors renforcer la brillance de la surface active, assez faible. Le noir d'un tel écran sera certes un peu moins noir que dans un écran habituel, car la surface de la couche supplémentaire réfléchira toujours la lumière, mais le bilan brillance-contraste reste positif.

Par analogie avec l'appellation de grille noire (ou "Black Matrix") utilisée dans l'art antérieur, on peut appeler la couche diffusante utilisée dans l'invention "grille blanche" ou "White Matrix".

De façon précise, la présente invention a pour objet un écran d'affichage à cristaux liquides comprenant :
- une première plaque transparente recouverte d'une matrice d'électrodes,
- une seconde plaque transparente recouverte d'une contre-électrode,
- inséré entre la première et la seconde plaque, un film de cristaux liquides diffusant la lumière ambiante en l'absence d'excitation électrique et transparents en présence d'excitation électrique,

cet écran d'affichage étant caractérisé par le fait qu'il comprend, en outre, une couche de matériau diffusant la lumière ambiante avec une brillance supérieure à celle du film de cristaux liquides en l'absence d'excitation, cette couche étant déposée sur l'une des deux plaques et étant ajourée par des ouvertures correspondant aux électrodes de la première plaque.

La couche en matériau diffusant (ou grille blanche, ou "White Matrix") peut être déposée sur la première plaque, autour des électrodes. Mais elle peut être appliquée également sur la seconde plaque, sur ou sous la contre-électrode, les ouvertures ajourant cette couche étant alors disposées en regard des électrodes de la première plaque.

### Brève description des dessins

- la figure 1, déjà décrite, illustre une première plaque d'un écran d'affichage du type à matrice active ;
- la figure 2, déjà décrite, illustre une seconde plaque avec contre-électrode ;
- la figure 3a montre, en vue de dessus, une première plaque avec ses électrodes ;
- la figure 3b montre la forme générale de la grille diffusante conforme à l'invention.

### Exposé détaillé de modes de réalisation

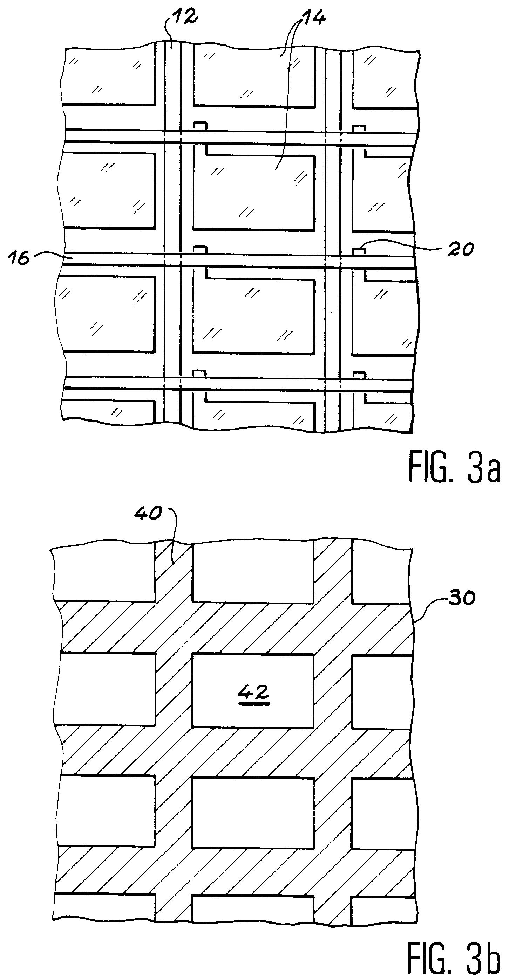

La figure 3a montre une première plaque conforme à la figure 1, avec sa matrice d'électrodes 14 et ses colonnes et lignes d'adressage, respectivement 12, 16.

La figure 3b montre la couche diffusante 40 supposée déposée, dans l'exemple illustré, sur la seconde plaque 30 associée à la première plaque de la figure 3a. Cette couche 40 est ajourée par des ouvertures 42 dont les dimensions correspondent aux électrodes 14 de la première plaque (fig. 3a). Le fonctionnement de l'écran n'est donc pas modifié dans les zones correspondant aux électrodes, mais la brillance de l'écran est considérablement augmentée entre ces zones.

On va décrire maintenant quelques techniques permettant de réaliser la couche diffusante.

Les deux caractéristiques essentielles de cette couche sont les suivantes :
- la couche ne doit pas présenter de sur-épaisseur car cela augmenterait les tensions de commande ; l'épaisseur souhaitable est inférieure ou égale au micromètre, mais certainement inférieur à 5 µ m. Cela implique des méthodes et des produits bien choisis (technique de couchage de film mince et, dans le cas de suspension, une granulométrie inférieure à l'épaisseur de la couche voulue) ;
- la couche doit présenter une forte brillance ; une brillance globale de 50 à 80% est souhaitable, mais il faut de toute façon qu'elle soit supérieure à 15% puisque ce niveau peut être atteint par un cristal liquide dispersé dans un polymère.

Trois types de matériaux au moins peuvent être utilisés permettant de remplir ces conditions :
- les dépôts métalliques,
- les pigments minéraux blancs,
- les films de polymères.

### a) dépôts métalliques

Tout type de métal peut être utilisé comme par exemple : l'aluminium, le chrome, l'or, l'argent, le nickel qui ont un bon coefficient de réflexion pour la lumière visible. Parmi ces métaux, l'aluminium est un bon candidat. Il permet de réaliser un écran dont la rétrodiffusion propre est renforcée par la réflexion de la lumière vers l'observateur. Avec l'aluminium, la brillance globale de l'écran atteint au moins 20%.

Il est souhaitable que la surface de l'aluminium soit rugueuse afin d'éviter les réflexions directes. Une méthode consiste à déposer sur du verre, une couche de 100 nm d'aluminium puis à graver cette couche et à la recouvrir d'une couche de 100 nm d'oxyde d'indium et d'étain (ITO). Il se forme alors une réaction entre l'aluminium et l'ITO, ce qui rend l'aluminium laiteux et diffusant. Une légère attaque de l'aluminium avant dépôt d'ITO améliore l'aspect de la couche d'aluminium.

### b) couche à base de pigments minéraux

On peut utiliser des pigments minéraux blancs dispersés dans des solvants organiques contenant un polymère dissout, qui sert de liant. Ces pigments sont des poudres minérales blanches telles que des sulfates de calcium, de baryum, de magnésium, par exemple, ou des oxydes tels que le dioxyde de titane, les alumines. Ces poudres doivent avoir une granulométrie très fine, compatible avec les épaisseurs souhaitées. Des dispersions de 1 à 200 g/l dans des solutions telles que des solvants chlorés, ou autres, peuvent être utilisées à la tournette pour réaliser un film sur l'électrode ou la contre-électrode de l'écran.

La couche est ensuite terminée par des techniques classiques de gravure. Ainsi, une fois le film étalé sur le support choisi, on peut déposer un film d'aluminium, appliquer ensuite une résine positive qui forme un film étalé sur toute la surface. Celle-ci est ensuite insolée à travers un masque correspondant à la surface de ce que l'on veut garder blanc. Comme cela se fait classiquement, la résine est dissoute sur les zones insolées, laissant apparaître l'aluminium, qui est éliminé sur celles-ci par une attaque acide. La couche blanche est ensuite enlevée sur cette partie avec un solvant approprié. Sur la zone non insolée, la résine est enlevée (opération dite de "stripping"). L'aluminium subit ensuite une attaque acide dégageant ainsi la matrice blanche réticulaire.

### c) utilisation de films de polymères

Une méthode consiste à réaliser des films de polymère qui sont, soit naturellement blancs, soit transparents et rendus blancs. Dans le premier cas, on peut utiliser des polymères semicristallins tels que les polyéthylènes, polypropylènes et certains polyoléfines fluorés.

Dans le cas de polymères transparents, on peut rendre blanc un film de ces polymères par une attaque chimique provoquant des microcraquelures. Ceci aura pour effet de produire une diffusion de la lumière. Les brillances ainsi obtenues peuvent atteindre 50%.

## Revendications

1. Ecran d'affichage à cristaux liquides comprenant :
- une première plaque transparente (10) recouverte d'une matrice d'électrodes (14),
- une seconde plaque transparente (30) recouverte d'une contre-électrode (36),
- inséré entre la première et la seconde plaque, un film de cristaux liquides diffusant la lumière ambiante en l'absence d'excitation électrique et transparents en présence d'excitation électrique,
cet écran d'affichage étant caractérisé par le fait qu'il comprend, en outre, une couche (40)de matériau diffusant la lumière ambiante avec une brillance supérieure à celle du film de cristaux liquides en l'absence d'excitation, cette couche étant déposée sur l'une des deux plaques (10, 30) et étant ajourée par des ouvertures (42) correspondant aux électrodes (14) de la première plaque.

2. Ecran d'affichage selon la revendication 1, caractérisé par le fait que la couche (40) en matériau diffusant est déposée sur la première plaque (10), entre les électrodes (14).

3. Ecran d'affichage selon la revendication 1, caractérisé par le fait que la couche (40) en matériau diffusant est déposée sur la contre-électrode (36) de la seconde plaque (30).

4. Ecran d'affichage selon la revendication 1, caractérisé par le fait que la couche (40) en matériau diffusant a une épaisseur inférieure à 5 µm.

5. Ecran d'affichage selon la revendication 1, caractérisé par le fait que le matériau diffusant est un métal.

6. Ecran d'affichage selon la revendication 5, caractérisé par le fait que le métal est pris dans le groupe constitué par l'aluminium, le chrome, l'or, l'argent et le nickel.

7. Ecran d'affichage selon la revendication 6, caractérisé par le fait que la couche de matériau rétrodiffusant est une couche d'aluminium recouverte d'une couche transparente d'oxyde d'étain et d'indium (ITO).

8. Ecran d'affichage selon la revendication 1, caractérisé par le fait que le matériau diffusant comprend un pigment minéral blanc dispersé dans un solvant organique.

9. Ecran d'affichage selon la revendication 1, caractérisé par le fait que le matériau diffusant est un film de polymère contenant des microcraquelures en surface.
